# EUROPEAN PATENT APPLICATION

(11) **EP 4 597 394 A1**
(43) Date of publication of application: **06.08.2025**
(21) Application number: 24155738.8
(22) Date of filing: 05.02.2024
(51) Int. Cl.: G06Q 20/06, G06Q 20/10, G06Q 20/38, G06Q 20/40

(54) **SECURE DIGITAL CURRENCY SERVER**

(71) Applicant: Giesecke+Devrient advance52 GmbH, 81677 München (DE)
(72) Inventor: Hupel, Lars, 81737 München (DE)
(74) Representative: Giesecke+Devrient IP

(57) **Abstract**

The invention relates to a secure digital currency server (10), comprising:
- an external transaction manager (16) for external digital currency transactions to other digital currency systems (2-5), including an external digital currency transaction from the first digital currency system (1) to a target digital currency system (5) using a target digital currency;
**characterized in that**
the external transaction manager (16) is configured to receive (222) a list of exchange candidates (22-25) from an exchange directory server (7) and to determine at least a first digital currency exchange unit (22) of the exchange candidates (22-25);
the external transaction manager (16) is configured to provide a transaction route (251, 252, 255) from the first digital currency system (1) via one or more digital currency exchange units (22, 24) of the exchange candidates (22-25), including the first digital currency exchange unit (22), to the target digital currency system (5).

## Description

The invention relates to a secure digital currency server and to a digital currency transaction system.

A variety of different approaches for providing digital currencies, particularly central bank digital currencies, has been discussed. A digital currency unit according to these approaches may be managed by different system components. Some approaches are using monetary tokens locally stored in participant devices, such as smart cards or secure elements. Other approaches rely on central digital currency transaction registers which keep track of every digital currency unit and every transaction in the currency system. Even further approaches manage the digital currency units in wallets on digital currency servers, having received the digital currency units from a central digital currency register.

If multiple digital currency systems exist, an exchange solution for providing exchange from a first to a second digital currency is required. A digital currency exchange may be e.g. provided by an exchange unit within each of the digital currency systems or by dedicated exchange units.

It has been proposed already to use a single exchange unit for the multiple digital currency systems, wherein a currency pool including digital currency units of all digital currency systems is used. Although this proposal may solve some of the complexity issues of different digital currency systems, it appears to be unlikely to be widely used in the near future, inter alia because the overall security requirements for this unit might be too high.

In some exchange solutions, the exchange unit may receive an exchange request from a wallet/participant of a first digital currency system, the request including a digital currency unit having a given monetary value in the first digital currency system and an indication of the second digital currency system. The exchange unit will send back a digital currency unit of a second digital currency system having the given monetary value. These solutions require the requesting unit to manage a second digital currency, which may however not fulfill the security requirements of the second digital currency system.

According to an object of the invention, an exchange solution shall be provided with improved reliability, particularly providing a similar or improved level of security and/or maintainability.

The above-identified objective is solved with the features of the independent patent claims. Further advantageous embodiments are described in the dependent patent claims.

A secure digital currency server is provided, which comprises an external transaction manager for external digital currency transactions to other digital currency systems, the external digital currency transactions including an external digital currency transaction from the first digital currency system to a target digital currency system using a target digital currency.

The external transaction manager is configured to receive a list of exchange candidates from an exchange directory server and to determine at least a first digital currency exchange unit of the exchange candidates.

The external transaction manager is further configured to provide a transaction route from the first digital currency system via one or more digital currency exchange units of the exchange candidates, including the first digital currency exchange unit, to the target digital currency system.

The transaction route of the present solution neither requires a requesting unit nor the secure digital currency server to manage digital currency units of the target or a second digital currency system. A good maintainability and/or reliability of the secure digital currency server is achieved, by avoiding complexity in the digital currency server. Furthermore, since the first digital currency exchange unit is determined from a list of exchange candidates and the provided transaction route being used, the reliability is increased. Reliability is particularly increased, if an transaction failure rate, a transaction routing step failure rate and/or a transaction (routing step) reversal rate is decreased. The number of digital currency pairs to be supported and thus complexity significantly rises with the number of digital currencies (4 => 6 pairs, 10 => 45 pairs ...). Even though every digital currency server theoretically could be enabled to handle all currency pairs, this increase in complexity in practice leads to decreased reliability. Finally, the present solution also affects security, particularly enables an increased security in the system. Security requirements of the other digital currency systems may be different. The present solution avoids the digital currency systems to end up with a sum of security compromises due to the exchange solution. In the present solution, the security requirements can remain different, particularly can be set at a higher level in the target digital currency system compared to the level of the digital currency server in the first digital currency system.

The list of exchange candidates preferably comprises one or more of the following for (each of) the exchange candidates: at least one currency pair, for which exchange and routing transactions are provided; and/or routing conditions, in particular for the exchange candidate, the currency and/or the currency pair; and/or an exchange address.

An exchange candidate may provide exchange and routing transactions for one or more digital currency pairs. A digital currency pair comprises two different digital currencies. Exchange and routing may be provided by the exchange candidate at least unidirectionally from a first to a second digital currency of the pair, optionally also bidirectionally, i.e. in both directions. As already mentioned and as apparent from the transaction route, the first exchange unit (and/or the exchange candidates) - after the exchange - routes the external transaction either to the digital currency target system or to another exchange unit, preferably another exchange unit of the exchange candidates.

The list of exchange candidates provides a reliable basis for the transaction route. Even if an initially determined digital currency exchange unit from the exchange candidates for some reason, e.g. currently, is not available, a further route may be determined from the list (and form the transaction route provided).

The list may further comprise routing conditions. The routing conditions may be routing conditions for the exchange candidate, the (first and/or target) digital currency and/or the currency pair. Preferably, at least one routing condition is provided for each currency pair.

An exchange candidate may have one or more exchange specific routing conditions. The respective routing condition thus neither applies in the currencies nor in the currency pair for which exchange is provided, but comes from the exchange unit. For example, the routing condition could be an exchange specific routing condition of the exchange unit. E.g. an identification condition for one or both participants (source and target) of the transaction or a transaction value limit may exist for an exchange unit. For example, if the exchange unit is certified to perform only transactions including participant IDs fulfilling a KYC-requirement (Know Your Customer) or open participant IDs, it may provide exchange and routing, only if this condition is met. In another example, the exchange unit may perform exchange and routing for small value transactions anonymously, but requires at least the recipient identity for transactions above a small value transaction limit.

A digital currency may have a routing condition. Currency specific routing conditions may be included in the list of exchange candidates. The currency specific routing conditions support the external transaction manager to identify transaction requests which can not be performed or to exclude routing options, e.g. direct routing to target or routing via an intermediate exchange unit. The routing condition may for example relate to the participant identity (e.g. ID-open for recipient), a transaction value (e.g. 0 < v < x), a transaction mode (e.g. no conditions), a security level (e.g. key, certificate or algorithm) or other transaction parameters. It should be noted that routing conditions of the digital currency systems may alternatively be provided by means of a digital currency directory server or initially stored in the external transaction manager.

A currency pair may have one or more routing conditions for the exchange unit. Preferably, these routing conditions are currency pair and exchange unit specific (examples see above, in isolation or any combination). Hence, they are not predetermined by the exchange unit as such or by the two digital currencies of the pair as such, but additionally apply in the exchange unit for the currency pair. For example, an effective maximum transaction value is not limited by the exchange unit and the digital currency systems, but only by the specific transaction unit used for one of the currencies (of the pair).

Different examples for routing conditions, such as identity related, value related, (cryptographic) security related or transaction mode related routing conditions have been given. The routing conditions in the list preferably are static routing conditions. As apparent from the above examples, the routing conditions basically will not change/ are static (or permanent). In particular the use of routing conditions in the list improves reliability by avoiding many routing failures.

The exchange address of the exchange candidate may be e.g. the communication address of the exchange candidate, such as an internet address, IP address or mobile communication address; a system wide service address, such as a unique ID of the exchange candidate in the system of digital currency systems, or an address of the first digital currency system, such as a wallet ID of the exchange unit in the first digital currency system.

In preferred variants the external transaction manager is configured to request the list of exchange candidates for the first digital currency and the target digital currency of the external digital currency transaction from the exchange directory server. The list received is filtered for the first digital currency and the target digital currency. In advantageous embodiments the list is filtered for direct and/or single intermediate transaction routes. The external transaction manager may request a direct routing list, a single intermediate list or a double intermediate list or combinations thereof. Preferably the external transaction manager initially requests a direct and single-intermediate list.

A list only comprising exchange candidates for direct transaction routes, is a direct routing list. A list only comprising exchange candidates for single intermediate transaction routes, is a single intermediate routing list. Accordingly, the direct and single-intermediate list includes the previous two lists. A list comprising exchange candidates for double intermediate transaction routes is a double intermediate routing list. A direct transaction route is a transaction route from the first digital currency system via the first digital currency exchange unit to the target digital currency system. A transaction route from the first digital currency system via the first digital currency exchange unit, to another digital currency exchange (first intermediate) and then to the target digital currency system is a single-intermediate transaction route. A transaction route comprising a still further digital currency exchange, second intermediate, would be a double-intermediate transaction route. Intermediate transaction routes preferably comprise a routing step in an intermediate digital currency.

Optionally only, e.g. if no transaction route can be determined from the first list received, a second request for a second list may be sent. For example, in a second request a double intermediate routing list (or a single intermediate routing list) may be requested.

In other variants the external transaction manager may receive an unfiltered list or a list filtered for the first digital currency only.

Furthermore, the list may be received automatically, i.e. not upon request. For example the list can be received in a push message triggered by changes in the previously received list and/or send periodically, preferably with a period p, 12 hours < p < 1 month, more preferably 1 day < p < 1 week.

Preferably, the received list is a filtered list. The filtered list being filtered for the first digital currency and/or for transaction routes including at most two or at most three digital currency exchange units (single-intermediate or double-intermediate list). The exchange directory server may particularly prepare the filtered list starting from digital currency exchange units for the first digital currency and adding digital currency exchange units for only the first (and second) exchanged currency.

The secure digital currency server may comprise a primary transaction manager for first digital currency transactions within a first digital currency system using a first digital currency.

As at least partly already indicated above, the transaction route preferably comprises
- a first routing transaction from the first digital currency system to the first digital currency exchange unit in the first digital currency; and/or
- an intermediate routing transaction from the first digital currency exchange unit to a second digital currency exchange unit of the exchange candidates in a second digital currency; and/or
- a target routing transaction from a digital currency exchange unit of the exchange candidates to the digital currency exchange to a target digital currency system in the target digital currency.

Each routing transaction can be considered to be a routing step. The transaction route comprises the first and the routing transaction for a direct transaction route. The transaction route may additionally comprise a single intermediate routing transaction (single intermediate currency and/or single intermediate transaction route) or only two at most two intermediate routing transactions (two intermediate currencies and/or double intermediate transaction route ). The external transaction manager may be configured to use the number of exchanges and/or the number of exchange units per route for providing the transaction route. Preferably, it limits one or both of the numbers to two or three (e.g.: 'only two exchanges' or 'only two exchange units and three exchanges').

In advantageous variants the external transaction manager uses a transaction property of the external digital currency transaction for providing the transaction route, the transaction property preferably comprising user/participant identity mode, transaction value mode, reversal mode, cryptographic mode and/or transaction value. In particular a transaction property (or the transaction properties) and a respective routing condition (or the respective routing conditions) may be compared for determining whether an exchange candidate of the list can be used in the transaction route.

The external transaction manager may use an exchange property of an exchange candidate for providing the transaction route. In particular the exchange property may be determined for one or more selected exchange candidates. A selected exchange candidates could be considered to be a route candidate. Basically, any of the above mentioned routing conditions which is exchange and/or pair specific (an not included in the list) may be determined. Accordingly, the exchange property may be static, a static exchange property.

In particular a transaction property (or the transaction properties) and a respective exchange property (or the respective exchange properties) may be compared for determining whether an exchange candidate of the list can be used in the transaction route.

The external transaction manager may be configured to apply a limit of at most three, preferably at most two, for the number of exchanges and/or the number of exchange units per route. It could apply such a limit when determining the candidate routes and/or when determining the transaction route from the candidate routes.

In preferred variants the exchange property is a dynamic (or current) exchange property. Many routing attempts or transactions fail due to temporary effects in the exchange or appear to fail. For example, the exchange unit may be generally able to exchange a currency pair, however temporarily is unable to exchange now or withing a given time limit. Example cases only could be: "temporary maintenance" or "no digital currency units in the respective digital currency available anymore today" or "effective exchange and routing time > x hours". Dynamic exchange properties may comprise an availability status (such as "not now" or "in 1 hour" or "ok"), a transaction timing status ("< x seconds" or "< y minutes" or "> z hours"). It thus is a major improvement, additionally to the list - to use dynamic exchange properties of an exchange candidate.

Preferably, the external transaction manager determines candidate routes based on the list received, and determines the transaction route based on additional information, such as a transaction property and/or an (static and/or dynamic) exchange property. In particular a candidate route comprises one or more of the exchange candidates. The (static and/or dynamic) exchange properties for the candidate route may be determined by receiving the exchange properties from the exchange candidates or by requesting the dynamic exchange properties from an dynamic exchange property service. Hence, the external transaction manager may be configured to request dynamic exchange properties for at least one exchange candidate, preferably from the exchange candidate or from a dynamic exchange property service unit.

The secure digital currency server may comprise multiple wallets of the first digital currency system, preferably multiple wallets of respective multiple participants (one or more wallets per participant). The wallets preferably include digital currency units of the first digital currency or control access to an account including digital currency units of the first digital currency. Preferably, the primary transaction manager and/or the external transaction manager is configured to support (and/ or provide) multiple wallets (of preferably different participants). As an example only, it may be referred to WO 2023/011758 A1 or WO 2023/011759 A1 for a transaction manager in a given context/digital currency system.

The external transaction manager may be configured to receive a user (participant) request for the external digital currency transaction and/or to initiate at least the first routing transaction of the transaction route.

In preferred variants the external transaction manager is configured to provide transaction routing data and/or transaction reversal data in a first routing transaction of the transaction route. The digital currency exchange units will use these data in their subsequent transaction. They may append transaction reversal data and optionally delete routing data already used. In alternative variants, the external transaction manager is configured to provide the transaction route, transaction routing data and/or transaction reversal data to a routing/reversal data list accessible by digital currency exchange units. The transaction routing/reversal data at least comprise a unique routing identifier (and/or a reversal identifier) for the external digital currency transaction, the transaction data (including source, target and value) and the digital currency exchange units in the transaction route. The digital currency exchange units may use the transaction routing data for a (target or intermediate) routing transaction and/or the transaction reversal data for reversal of a routing (first, intermediate or target) transaction if required. They may append transaction routing/reversal data in the routing/reversal data list.

It should be considered that even a target transaction may be rejected due to temporary issues, such as a holding limit being exceeded or the target (wallet) being blocked by a previous failed transaction (not reversed yet). Hence, the ability to revert routing transactions in many cases improves the final success rate of the external transaction and sometimes avoids blocking times due to failed, unreversed transactions.

According to a further aspect of the present invention there is provided a system comprising: multiple digital currency systems; digital currency exchange units; an exchange directory server configured to provide a list of exchange candidates; and a secure digital currency server as described above.

The system may further comprise an external transaction route tracking and/or reversal list; and/or a transaction log; and/or a dynamic exchange property determination unit.

Due to the differences in the digital currency systems, of course details of the transactions as such can be omitted. The present application tries to use terms such as digital currency and transaction which should apply for any digital currency system. The terms are intended to be technology independent as far as the possible different digital currency systems are concerned. Without limitation, the digital currency system may e.g. be offline/online/ token/account/central/decentral/DLT/blockchain/...... solutions. Hence, for example the source and the target of the external transaction may significantly differ (e.g. token wallet versus online account). Thus the functional meaning of the term should be considered. For options in a digital currency server and for some terms used in token based solution, it can be referred to WO 2023/011758 A1 or WO 2023/011759 A1.

In the following, the invention or further embodiments and advantages of the invention are explained in more detail based on drawings, wherein the drawings describe only embodiments of the invention. At least elements drawn with dashed lines are considered as optional elements. The drawings are not to be regarded as true to scale, and individual elements of the drawings may be shown in exaggeratedly large or exaggeratedly simplified form.
Fig. 1 shows a known centralized solution for providing exchange;
Fig. 2 shows a preferred embodiment of a secure digital currency server and an external transaction routed via digital currency exchange units;
Fig. 3 shows another preferred embodiment of a secure digital currency server and an external transaction routed via digital currency exchange units; and
Fig. 4 illustrates a list of exchange candidates.

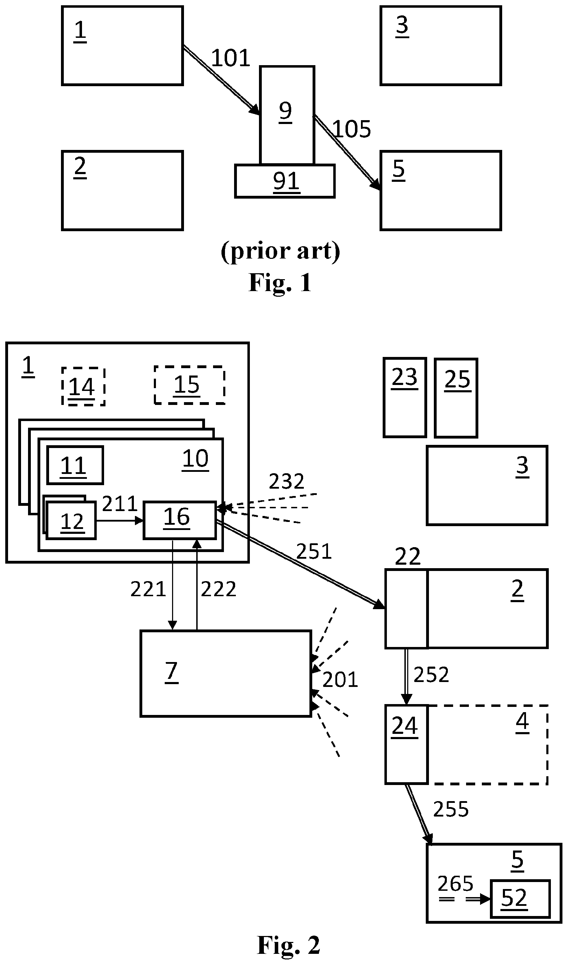

Fig. 1 illustrates a system comprising multiple digital currency systems 1-5 each providing its own digital currency. Withing the digital currency systems 1-5 internal transactions will be performed in the respective (first, second ...) digital currency. For external transactions between the digital currency systems 1-5 exchange from one digital currency to another is required. The system comprises a single exchange unit 9. The exchange unit 9 comprises a pool 91 in which units of all digital currencies are provided for an exchange. Of course, due to the differences between the digital currency systems 1 - 5, the digital currencies will be represented quite differently in the pool. For example only, the pool will store a mixture of digital currency tokens, secret access addresses, account numbers and/or secret or issued authentication elements from the digital currency systems 1-5 respectively.

An external transaction from the first digital currency system 1 using the first digital currency to the fifth digital currency system 5 using the fifth digital currency shall be performed. In a first transaction 101 the first digital currency system 1 transfers a monetary amount in the first digital currency to the central exchange unit 9. The central exchange unit 9 adds the received first digital currency into the pool 91 and accordingly takes fifth digital currency from the pool 91. The central exchange unit 9 thus provides exchange. In contrast to many other known prior art systems, the exchanged fifth digital currency is not transferred back to (the requesting party, within) the first digital transaction system 1. In a second transaction 105 the fifth digital currency is transferred from the central exchange unit 9 to the (target within the) fifth digital currency system 5. Fig. 2 illustrates a system comprising multiple digital currency systems 1-5 each providing its own digital currency. Within each of the digital currency systems 1-5 internal transactions will be performed in the respective (first, second ...) digital currency.

A digital currency server 10 comprises a primary transaction manager 11 for internal transactions and an external transaction manager 16 for external transactions. Multiple digital currency exchange units 22-25 provide exchange and routing for external transactions. The system further comprises an exchange directory server 7.

Digital currency servers will typically be operated by financial service providers (or commercial banks). The (first to fifth) digital currency is typically issued by a central bank. As indicated in Fig. 1, the digital currency system 1 may comprise multiple digital currency servers 10.

The first digital currency system 1 optionally further comprises wallets (or accounts or participant units) 12, 14 and/or a currency system server 15. The secure digital currency server may operate multiple wallets, including source wallet 12, for participants. For example only, WO 2023/011758 A1 describes a possible type of server operating wallets for participants, the server including a primary (or internal) transaction manager. The existence and/or the role of the currency system server 15 depends on the digital currency system. It could e.g. be or comprise a currency register, a transaction log, a DLT and/or a currency issuer server. The unit of a participant holding (and/or controlling) the digital currency owned by the participant, for the sake of simplicity is referred to as a wallet herein.

As indicated for digital currency exchange unit 24, the exchange unit may be part of a digital currency system or may be independent, see digital currency exchange units 23, 25. As indicated for the first and the fifth digital currency system 1, 5 an digital currency exchange unit (may or) may not exist in the digital currency system.

An external digital currency transaction shall be performed from the first digital currency system 1 (or source system) to the fifth digital currency system 5 (or target system). Fig. 2 shows a source wallet 12 in the first digital currency system 1 and a target wallet 52 in the fifth digital currency system 5.

The external transaction manager 16 receives 222 a list of exchange candidates from the exchange directory server 7. Based on the received list the external transaction manager 16 determines a first digital currency exchange unit 22 for a transaction route 251, 252, 255 from the first digital currency system 1 to the fifth or target digital currency system 5. The external transaction manager 16 provides the transaction route 251, 252, 255 from the first digital currency system 1 via the first digital currency exchange unit 22 (and optionally a further digital currency exchange unit 24) to the target digital currency system 5.

The list comprises the exchange candidates, e.g. their name, identifier and/or address, optionally the list further comprises static routing conditions and/or currency pairs. The currency pairs for which exchange and routing is provided are listed for each exchange candidate. In addition routing conditions, which may be specific for the exchange and/or the currency pair, can be included in the list. The list enables the external transaction manager 16 to provide the transaction route (or initially one or more candidate routes).

In the example illustrated in Fig. 2, the external transaction manager 16 requests 221 the list for the source and target currencies of the external transaction. The exchange directory server 7 now selectively provides a list only for the source and target currencies (applies a filter). Thus each exchange candidate in the list received 222 at least provides exchange and routing for either the source digital currency or the target digital currency.

The exchange directory server 7 for providing the list has collected 201 exchange information from the digital currency exchange units 22-25. In particular he collects the currency pairs and/or the static routing conditions from the digital currency exchange units 22-25. Static routing conditions may be routing conditions of the digital currency exchange unit and/or routing conditions for the currency pair. Static routing conditions can assumed to remain unchanged for external transactions.

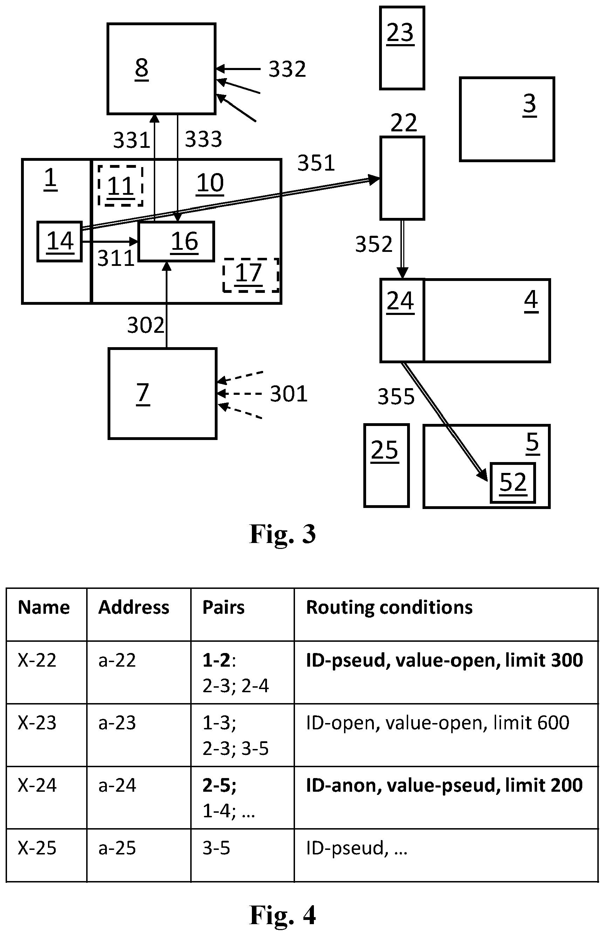

Fig. 4 illustrates an example of a list of exchange candidates received.

The list comprises at least the exchange candidates 22-25. Name and/or address can be included as indicated by the first and second columns of the list in Fig. 4. The list has been filtered by the exchange directory server 7 for the first and fifth digital currencies (source and target digital currencies). Hence, each of the exchange candidates at least exchanges either the source or the target digital currency. Accordingly, further digital currency exchange units, which are not listed, may exist in the system.

For each exchange candidate 22-25 one or more currency pairs are indicated for which exchange and routing may be provided, see third column. Hence, for example digital currency exchange unit 22 supports exchange from the first to the second digital currency '1-2', from the second to the third digital currency '2-3' and from the second to the fourth digital currency '2-4'. In variants which will be explained later, the list may be limited to currency pairs including both currencies (in the current example the list would be empty) or to currency pairs including at least one of the source and target currencies (in the current example: for 'X-22' only one pair: '1-2').

For each exchange candidate 22-25 and/or for (some or each) currency pair, the list may comprise routing conditions (see column 4). In the example of Fig. 4 the routing conditions may apply for the exchange candidate (i.e. for all pairs) or for the digital currency pair.

A first routing condition relates to the participant identity (source and/or target). Preferably, the first routing condition relates at least to the target participant identity. A participant identity, like a full name, an identity document number or a tax number, may or may not be fully, indirectly or partially disclosed in transactions. Available options and system requirements may be different in the digital currency systems. A participant identity may have to be for example fully disclosed 'ID-open', at least indirectly disclosed 'ID-pseud' (assuming that the identity can be requested/determined if required) or not disclosed 'ID-anon'.

A second routing condition relates to the visibility of the value, the monetary value transferred. Digital currency systems fully or partially hiding the value are known in the field. For example WO 2021/170645 A1 teaches different modes for full or partial hiding of the value. The examples for the second routing conditions are coded similarly as above. A value may have to be fully disclosed 'value-open', may have to be partially disclosed (such as in a value range) or be discoverable (upon request) 'value-pseud' or may be hidden 'value-anon'.

Finally, the example shows a third routing condition being a transaction limit. It should be considered that digital currency exchange units may have different limits for the same currency pair. Hence, the third routing condition may as well be specific for the exchange and/or the digital currency pair.

Other routing conditions may exist. For example, an (effective) exchange rate for the currency pair and/or an exchange fee for the currency pair/the exchange unit may be given.

A routing condition may exclude an exchange candidate from the list to be part of the transaction route. In the list of Fig. 4 the digital currency exchange unit 23 requires the identity of the participant(s) to be disclosed for the currency pair '1-3' (see condition 'ID-open'). This routing condition may be a condition of the digital currency system 3 or a condition of the digital currency exchange unit 23, e.g. its own voluntary/intentional restriction. If the external transaction could not be performed under this condition, the currency pair '1-3' of the exchange candidate 23 cannot be used. This could for example be the case, if the (target/source) digital currency system (1,5) or the (target/source) wallet (12,52) only provide pseudonyms in transactions.

Returning to Fig. 2, the external transaction manager 16 determines at least one candidate route based on the list received, each candidate route comprising at least one, preferably only one or only two, of the exchange candidates. Preferably, the external transaction manager 16 additionally acquires 232 further exchange information, particularly dynamic exchange information from the digital currency exchange units in the candidate routes.

For a list comprising only the second and third column of Fig. 4, no direct exchange is provided but direct routing (single exchange unit in transaction route) is available via digital currency exchange unit 23. If only two exchange units are allowed in a candidate route, a first candidate route comprises the digital currency exchange units 22 and 24, a second candidate route comprises the digital currency exchange unit 23, a third candidate route comprises digital currency exchange units 22 and 25 and a fourth candidate route comprises digital currency exchange units 23 and 25. More candidate routes like digital currency exchange units 22, 23 and 25 theoretically exist, if three exchange units are considered in a candidate route. However, preferably (at least initially) candidate routes comprise two exchange units only.

The external transaction manager 16 now in step 232 may request further exchange information, including static routing conditions, e.g. if not included in the list, and possibly dynamic exchange information, from the digital currency exchange units 22-25 in the candidate routes. Preferably, only dynamic exchange information are collected 232.

A dynamic exchange property may be specific for a currency pair or may generally apply to the digital currency exchange unit. An availability status can be a dynamic exchange property. The availability status could be simple 'ok' or 'not available' or more detailed such as 'available again in x minutes/y hours'. An (effective) exchange rate and/or exchange fee can be a dynamic exchange property. An effective exchange rate includes an exchange fee. A transaction timing status can be a dynamic exchange property. The transaction timing should indicate the expected or guaranteed time, preferably including (receipt,) exchange and next routing step. The transaction timing status may comprise upper and/or lower timing limits and/or average time. The transaction timing status could for example be 't= x seconds' (average) or 't < x time units' or 't > x time units' or 'x time units > t > y time units' or even combinations thereof.

Due to the routing conditions in the list or due to a dynamic exchange information a digital currency exchange unit such as digital currency exchange unit 23 (or its currency pair '1-3') may not be available for the external transaction. If only one candidate route remains, it would be provided as the candidate route. If multiple candidate routes remain after checking the routing conditions, based on a number of exchanges in the route and/or dynamic exchange information the transaction route is determined (selected from the candidate routes). In the example discussed two candidate routes, the second via digital currency exchange units 22 and 24 and the third via digital currency exchange units 22 and 25 remain. However, the third candidate route requires three exchanges '1-2' '2-3' and '3-5', whereas the second candidate route only requires two exchanges '1-2' '2-5. In a first variant the candidate route(s) having a lower number of exchanges is(are) selected (determined). Accordingly, the second candidate route would be the transaction route. In a second variant (or in a next step) the dynamic exchange information would be evaluated. Also based on a transaction timing, which will typically be higher due to the additional exchange process, as the dynamic exchange information in the example the second candidate route would be used. The transaction route preferably comprises only a single (and/or at most two) digital currency exchange units.

The transaction route for the external transaction comprises a first routing transaction 251 in the first currency from the first digital currency system to the first digital currency exchange unit 22 determined by the external transaction manager 16. The transaction route further comprises at least a target routing transaction 255 from a currency exchange unit, in Fig. 4 the intermediate digital currency exchange unit 24, to the target digital currency system 5 in the target digital currency. Preferably transaction route comprises (no or) only a single intermediate routing transaction 252. The intermediate routing transaction 252 in Fig. 4 is performed in the second digital currency from the first digital currency exchange unit 22 to the intermediate digital currency exchange unit 24.

As also at least partly indicated in Fig. 4 the external transaction may optionally require an internal transaction 265 (and/or 211) in the target (and/or the source) digital currency system. Such possibly existing internal transactions however are not related to the routing presently discussed. They may be required e.g. generally in the digital currency system 1, 5 or due to the type of the wallet 12, 52. They are however not considered to be a part of the transaction route of the external transaction to be determined/provided, but rather would be predetermined.

For determining the transaction route (or the candidate route) the external transaction manager 16 may compare one or more properties of the external transaction with routing conditions received in the list and/or (static or dynamic) exchange information acquired. In particular he may first determine candidate routes from the list and secondly determine the transaction route from the candidate routes based on the further acquired (static and/or dynamic) exchange information. In both determining steps the external transaction manager 16 may compare one or more properties of the external transaction to routing conditions received in the list and/or (static or dynamic) exchange information acquired.

Hence, a digital currency exchange unit, such as digital currency exchange unit 23, or a candidate route including the digital currency exchange unit, may for example be excluded since a routing condition does not match the transaction property ('ID-open <>'ID-pseud') or since an exchange for the digital currency pair is 'not available anymore today' (far too late for the external transaction) or since the average time is too high (t=1 hour) for an external transaction requiring t < 20 seconds.

In the embodiment of Fig. 2 it is assumed that transaction routing and /or reversal information will be included in the first routing transaction 251. The transaction routing information may comprise a unique reference for the external transaction. It should be unique in the system, hence it may be an external transaction identifier. The transaction routing information will comprise the target, the target digital currency system 5 and/or the target wallet 52. The transaction routing information would comprise intermediate digital currency exchange unit(s) of the route such as digital currency exchange unit 24. Reversal information may be separately included in the first routing transaction 251. However, if the digital currency exchange unit(s) do not delete the information required for reversal but forward the transaction routing information in the intermediate and/or target transactions 252, 255 they may not be additionally required. Routing and/or reversal information may be added to the intermediate and/or target transactions 252, 255 by the digital currency exchange unit(s). For example, an (internal) transaction identifier of the previous digital currency system or an exchange and routing identifier of the currency may be added. Accordingly, each entity of the transaction route has sufficient information in the received transaction for routing the external transaction to the target and/or in terms of reversal for reversing the transaction at their end and for initiating reversal of the external transaction (e.g. transaction wise backwards).

It should be noted that the external transaction manager 16 provides the transaction route and at least initiates the first routing transaction 251. However, the first routing transaction 251 may or may not come from the external transaction manager 16. The external transaction manager 16 in variants triggers/initiates the first routing transaction 251, e.g. from the wallet 12, 14 to the digital currency exchange unit 22.

The digital currency exchange unit(s) 22-25 - as indicated above - are configured to provide exchange between currency pairs and to route external transactions to a target or to an intermediary digital currency exchange unit. In addition they should support the exchange information collection 201 of the exchange directory server and/or the (dynamic) information collection 232 of the external transaction manager 16 and/or external transaction reversal.

Fig. 3 shows another embodiment of a digital currency server 10 in a similar system as described above for Fig. 2. In the following primarily three main differences/further aspects will be described in more detail.

The external transaction manager 16 receives 302 a list of exchange candidates from the exchange directory server 7. The exchange candidates and the optional further information in the list (see above), is previously collected 301 by the exchange directory server 7 from the digital currency exchange units 22-25.

The list may be received in a push mode of the exchange directory server 7. The exchange directory server 7 sends the list repeatedly and/or on a regular basis, e.g. when a trigger, such as a time (daily, every second day or weekly ...) or a pre-defined number of changes, is fulfilled.

Since no request for the list is send, the received list may be unfiltered. It would thus include all digital currency exchange units offering exchange and routing in the system. Preferably, the list is filtered for (the digital currency server 10 and thus) the first digital currency. Hence, the exchange directory server 7 filters the collected information and sends a filtered list. The list only includes digital currency exchange units offering exchange from the first digital currency to a first exchanged digital currency and digital currency exchange units offering a first (or optionally second) further exchange from the first (or respectively second) exchanged/intermediate digital currency. Whether the list includes exchange candidates for two or three subsequent exchanges - starting from the first digital currency - maybe either pre-defined for the exchange directory server 7 or configurable for the (respective) digital currency server 10. If initially a list for two subsequent exchanges is received and no transaction route could be determined, a list for the target currency and three subsequent exchanges might be requested.

The list received in Fig. 3 preferably comprises static routing conditions (see above).

The external transaction manager 16 for one or more exchange candidates of the list requests 331 further exchange information, preferably dynamic exchange information (but optionally also static exchange information), from an exchange property server 8. The request may be send for the one or more exchange candidates included in at least one candidate route determined by the external transaction manager 16.

The exchange property server 8 collects 332 the further exchange information from the digital currency exchange units 22-25 in the request. Assuming that digital currency exchange unit 23 is not part of any candidate route, e.g. due to a routing condition, further, preferably dynamic, exchange information may be collected 332 from digital currency exchange units 22, 24 and 25 (unless the third candidate route has been excluded already, e.g. due to the number of exchanges).

The external transaction manager 16 receives 333 the requested further exchange information from the exchange property server 8. Based on the received further exchange information, the candidate route via digital currency exchange units 22 and 24 is determined to be used as the transaction route. For example, a candidate route via digital currency exchange units 22 and 25 is not selected due to dynamic exchange information for digital currency exchange unit 25, such as 'temporary not available' or 'time > 1 minute'. Finally, the transaction route 351, 352, 355 to the target digital currency system 5 is provided (cf. Fig. 2).

The external transaction manager 16 receives a request 311 for the external transaction. In Fig. 3 a source wallet 14 may be a wallet of the first digital currency system, which may or may not be operated by another secure digital currency server. Since the wallet 14 shown in Fig.3 is not operated/hosted by secure digital currency server 10, the external transaction manager 16 will initiate the external transaction via the transaction route 351, 352, 355. The transaction route starts with a first routing transfer 351 from the first digital currency system 1, preferably the source wallet 14 or a digital currency server of the source wallet 14, to the digital currency exchange unit 22.

In a first alternative the external transaction manager 16 could return the transaction route to the source wallet 14. The transaction route, transaction routing data and/or transaction reversal data might be fully (or with its remaining parts) included in the first routing transfer 351. This alternative option has already been discussed in more detail above.

In a second alternative a routing/reversal data list 17 is provided in the system, which is accessible at least by the digital currency exchange units 22-25. The external transaction manager 16 stores transaction routing data and/or transaction reversal data for the transaction route in the routing/reversal data list 17. The wallet 14 and/or the digital currency exchange units 22-25 receive a link to or an identifier of the stored data in the outing/reversal data list 17. The link or identifier may be included in the first (and further) routing transfer(s). Optionally, separate lists may be used for routing and for reversal.

The primary (or internal) transaction manager 11 is optional in Fig. 3. Each of the above differences can be separately or in combination be added/used in the system of Fig. 2.

Turning back to Fig. 4, it has already been discussed that digital currency exchange unit 23 may exchange the first digital currency into the fifth digital currency in two exchange steps. In the above variants, the external transaction manager, either from the list or from the further exchange information knows any exchange steps of the external transaction. In the following however, variants will be discussed in which a digital currency exchange unit offers exchange and routing with hidden exchange or routing steps. In other words, at least one digital currency exchange unit performs (hidden) sub-routing. In those cases steps are hidden for the external transaction manager 16.

In a received list for example two or more digital currency exchange units 23 and 25 offer an exchange from the first to the fifth digital currency. Digital currency exchange unit 23 however internally uses two exchanges ('1-3' and '3-5'), hence uses one hidden exchange. Digital currency exchange unit 25 uses another digital currency exchange unit, e.g. digital currency exchange unit 23 or 24, for a hidden first exchange and also needs to perform at least one hidden routing step. If digital currency exchange unit 25 intends to use digital currency exchange unit 23 for the first exchange two hidden routing steps (to and from unit 23) would exist.

The external transaction manager 16 in the process of determining the transaction route for such variants shall not consider the number of exchanges and/or exchange units withing candidate routes. The external transaction manager 16 now preferably uses dynamic exchange information for selecting the transaction route from the candidate routes. For example, the transaction route is selected from the candidates based on effective exchange rates and/or estimated transaction times. The external transaction manager 16 is thereby very likely to select the more reliable route via digital currency exchange unit 23. Although the present solution is able to also handle sub-routing scenarios, these variants are less preferred due to decreased reliability.

In particular it should be considered that transaction routing data and/or transaction reversal data, regardless if transferred or initially centrally stored, would be incomplete. Hence, particularly a reversal of the external transaction (in full or in part) would become more complicated.

A partial solution in this regard, again usable in systems with aspects of Fig. 2 or 3, may however be provided by using a routing/reversal data list 17. The external transaction manager 16 may initially provide an incomplete (or even empty) data entry for the external transaction in the routing/reversal data list 17. One or more sub-routing digital currency exchange units may than add transaction routing data and/or transaction reversal data for the (hidden) exchange and/or routing steps of the external transaction not yet included in the list.

### REFERENCE SIGNS

- 9: central exchange server
- 1-5: digital currency system
- 91: currency pool

- 7: exchange directory server
- 10: digital currency server
- 11: primary transaction manager
- 12, 14: source wallet
- 15: currency system server
- 16: external transaction manager
- 22-25: digital currency exchange unit
- 52: target wallet

- 201: exchange information collection
- 211: payment request
- 221: candidate request
- 222: candidate response
- 232: current information collection
- 251: first routing transfer
- 252: second routing transfer
- 255: third routing transfer
- 265: optional routing transfer

- 8: exchange property server
- 17: routing/reversal list
- 301: exchange information collection
- 302: candidate list
- 311: payment request
- 331: routing request
- 332: property information
- 333: routing information
- 351: first routing transfer
- 352: second routing transfer
- 355: third routing transfer

## Claims

1. Secure digital currency server (10) comprising:
- an external transaction manager (16) for external digital currency transactions to other digital currency systems (2-5), including an external digital currency transaction from a first digital currency system (1) using a first digital currency to a target digital currency system (5) using a target digital currency;
**characterized in that**
the external transaction manager (16) is configured to receive (222) a list of exchange candidates (22-25) from an exchange directory server (7) and to determine at least a first digital currency exchange unit (22) of the exchange candidates (22-25);
the external transaction manager (16) is configured to provide a transaction route (251, 252, 255) from the first digital currency system (1) via one or more digital currency exchange units (22, 24) of the exchange candidates (22-25), including the first digital currency exchange unit (22), to the target digital currency system (5).

2. Secure digital currency server (10) according to claim 1, wherein the list comprises for the exchange candidates (22-25)
- at least one currency pair for which exchange and routing transactions are provided; and/or
- routing conditions, in particular for the exchange candidate, the currency and/or the currency pair; and/or
- an exchange address.

3. Secure digital currency server (10) according to one of the preceding claims,
wherein the received list is a filtered list, the filtered list being filtered for the first digital currency and/or for transaction routes including at most two or at most three digital currency exchange units.

4. Secure digital currency server (10) according to one of the preceding claims,
wherein the external transaction manager (16) is configured to request (221) the list of exchange candidates (22-25) for the first digital currency and the target digital currency of the external digital currency transaction, the list preferably only comprises exchange candidates providing exchange from/to at least one of the first digital currency and the target digital currency.

5. Secure digital currency server (10) according to one of the preceding claims, further comprising: a primary transaction manager (11) for first digital currency transactions within the first digital currency system (1) using the first digital currency.

6. Secure digital currency server (10) according to one of the preceding claims,
wherein the transaction route (251, 252, 255) comprises
- a first routing transaction (251) from the first digital currency system to the first digital currency exchange unit (22) in the first digital currency; and/or
- an intermediate routing transaction (252) from the first digital currency exchange unit (22) to a second digital currency exchange unit (22) of the exchange candidates (22-25) in a second digital currency; and/or
- a target routing transaction (255) from a digital currency exchange unit (22) of the exchange candidates (22-25) to the digital currency exchange (22) to a target digital currency system (5) in the target digital currency.

7. Secure digital currency server (10) according to one of the preceding claims,
wherein the external transaction manager (16) uses a transaction property of the external digital currency transaction for providing the transaction route (251-255), the transaction property preferably comprising user identity mode, transaction value mode, reversal mode and/or transaction value.

8. Secure digital currency server (10) according to one of the preceding claims,
wherein the external transaction manager (16) uses an exchange property of an exchange candidate (22-25) for providing the transaction route (251-255), the exchange property is preferably determined after receiving the list and/or is a dynamic exchange property.

9. Secure digital currency server (10) according to one of the preceding claims,
wherein the external transaction manager (16) is configured to use the number of exchanges and/or the number of exchange units per route for providing the transaction route (251, 252, 255), and preferably limits the number to two or three.

10. Secure digital currency server (10) according to one of the preceding claims,
wherein the external transaction manager (16)
- determines candidate routes based on the list received; and
- determines the transaction route (251, 252, 255) from the candidate routes based on additional information, such as a transaction property and/or an exchange property;
wherein preferably a limit of at most three, preferably at most two, is applied for the number of exchanges and/or the number of exchange units per route.

11. Secure digital currency server (10) according to one of the preceding claims, wherein the external transaction manager (16) is configured to request dynamic exchange properties for at least one exchange candidate, preferably from the exchange candidate or from a dynamic exchange property service unit (8).

12. Secure digital currency server (10) according to one of the preceding claims, wherein the external transaction manager (16) is configured to
- receive (211) a user request for the external digital currency transaction; and/or
- at least initiate a first routing transaction (251) of the transaction route (251-255).

13. Secure digital currency server (10) according to one of the preceding claims, wherein the external transaction manager (16) is configured to provide transaction routing and/or reversal data in a first routing transaction (251) of the transaction route (251-255).

14. Secure digital currency server (10) according to one of the preceding claims, wherein the external transaction manager (16) provides the transaction route and/or transaction reversal data to a routing/reversal data list (17) accessible by digital currency exchange units (22, 23).

15. A system comprising:
- multiple digital currency systems (1-5);
- digital currency exchange units (22-25);
- an exchange directory server (7) configured to provide a list of exchange candidates; and
- a secure digital currency server (10) according to one of claims 1 to 14.

16. The system according to claim 15 further comprising:
- an external transaction route tracking and/or reversal list (17); and/or
- a transaction log; and/or
- an dynamic exchange property determination unit (8).
